(19) Europäisches Patentamt
European Patent Office
Office européen des brevets

(11) **EP 2 557 840 A1**

(12) **EUROPEAN PATENT APPLICATION**
published in accordance with Art. 153(4) EPC

(43) Date of publication:
**13.02.2013 Bulletin 2013/07**

(51) Int Cl.:
**H04W 28/16** (2009.01)

(21) Application number: **10849248.9**

(22) Date of filing: **06.04.2010**

(86) International application number:
**PCT/CN2010/071561**

(87) International publication number:
**WO 2011/124011 (13.10.2011 Gazette 2011/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Alcatel Lucent**
**75007 Paris (FR)**

(72) Inventors:
• **ZHENG, Wu**
  **Shanghai 201206 (CN)**
• **LIU, Jimin**
  **Shanghai 201206 (CN)**

• **LENG, Xiaobing**
  **Shanghai 201206 (CN)**
• **ZHANG, Kaibin**
  **Shanghai 201206 (CN)**
• **SHEN, Gang**
  **Shanghai 201206 (CN)**

(74) Representative: **Dreiss Patentanwälte**
**Gerokstrasse 1**
**70188 Stuttgart (DE)**

(54) **METHOD, EQUIPMENT AND NODE FOR DETERMINING QUALITY OF SERVICE IN EACH SECTION OF LINK**

(57) Embodiments of the present invention disclose a method and apparatus for determining QoS of respective segments of a link. The method may comprise: determining QoS target values of the respective segments at least based on an overall requirement on the QoS of the link according to a relationship between QoS of respective segments and overall QoS of the link. With technical solutions of the present invention, it is provided a solution that could guarantee the QoS for a multi-hop relay system, and the solution has a great scalability and a good backward compatibility and is transparent to both a core network and user equipments.

$$Q_{eNB-RN-UE} = F(Q_{Backhaul}, Q_{Access})$$

$Q_{Backhaul}$   $Q_{Access}$

eNB   RN   UE

**Fig.1**

EP 2 557 840 A1

**Description**

TECHNICAL FIELD

The present invention relates to the technical field of relaying, and more particularly to a method, apparatus, and network node for determining Quality of Service (QoS) of respective segments of a link.

BACKGROUND

In existing communication systems, operators may provide diversified services to customers, for example, multi-media telephone, mobile TV, online game, and etc. These services have their own characteristics, and different kinds of services have different requirements on performances such as bit rate, packet delay, etc. For example, for voice session and video session, it requires less time delay and may allow a certain bit error rate; while for services such as file transfer, it requires a relatively low bit error rate but may allow a certain time delay.

These problems can be solved through over-provisioning. However, in a cellular access network, the cost for transmission capacity, especially for radio spectrum and backhaul from a base station, is relatively high; thus, such the over-provisioning technical scheme is usually uneconomical. Therefore, there is a need for a simple and effective standardized QoS mechanism to allow an access operator to enable service differentiation and to control the performance experienced by packet traffic for a certain service.

Policy and Charging Control (PCC) provides a way to manage service related connections in a consistent and controlled way. It determines how bearer resources are allocated for a given service, including how the service flows are partitioned to bearers, what QoS characteristics those bearers will have, and finally, what kind of accounting and charging policy will be applied. For example, in 3rd Generation Partnership Project (3GPP) specification, each Service Data Flow (SDF) is associated with one and only one QoS Class Identifier (QCI), and each QCI corresponds to a corresponding QoS, for example, priority, packet delay budget (PDB), packet error loss rate (PLER).

In the current 3GPP specification, a single-hop technology directly from a base station to a user equipment is applied. Thus, in the 3GPP specification, QoS guarantee is just designed for single-hop, for example, designating a packet delay budget (PDB), a packet error loss rate (PELR), etc., for different QCIs.

A multi-hop relay technology is introduced in the subsequent long-term evolution (LTE)-advanced of the 3rd Generation Partnership Project (3GPP LTE-A). The multi-hop relay technology is a good solution for coverage extension and throughput enhancement at a relatively low capital expenditure (CapEX) and operation expenditure (OpEX), which has been accepted by LTE-A Rel-10. In accordance with the multi-hop relay technology, the data transmission between the user equipment and the base station has to be forwarded via one or more relay stations.

However, in the prior art, there is no QoS guarantee for a multi-hop relay scenario. For example, it considers a scenario in which QCI#2 is applied in a simple 2-hop relay system. Based on the requirement on QCI#2 in the 3GPP specification, the corresponding PELR should be $10^{-3}$. However, even if the link between the evolved node B (eNB) and the relay node (RN) and the link between the RN and the use equipment (UE) both satisfy the required PELR, i.e., the PELR of $10^{-3}$, the whole link eNB-RN-UE can not achieve the total required PELR at $10^{-3}$.

Thus, there is a need in the art for QoS guarantee in a multi-hop relay system.

SUMMARY OF THE INVENTION

To this end, in present invention, there is provided a technical solution of determining QoS of respective segments of a link for a multi-relay system such as 3GPP LTE-A.

According to one aspect of the present invention, there is provided a method for determining QoS of respective segments of a link. The method may comprise: determining QoS target values of respective segments at least based on an overall requirement on QoS of the link according to a relationship between QoS of respective segments and overall QoS of the link.

According to an embodiment of the present invention, the method may further comprise: collecting a parameter affecting QoS; wherein determining QoS target values of the respective segments may be further performed based on the collected parameter. In this case, determining the QoS target values of the respective segments may preferably comprise: performing an optimization operation with objectives of the achievability of the QoS target values of the respective segments and maximization of radio resources utilization rate, under the constrains of the relations, the overall requirement, and collected parameter, so as to obtain the QoS target values of respective segments.

In another embodiment of the present invention, the method may further comprise: triggering, in response to that a QoS target value of a segment is unable to be achieved, the re-determination of the QoS target values of respective segments.

According to an embodiment of the present invention, determining the QoS target values of the respective segments may be performed at one of network nodes related to the link. In this embodiment, the method may further comprise: sending to respective network nodes related to the link the determined QoS target values such that the respective network nodes perform link adaptive and scheduling operations based on the QoS target values.

According to another embodiment of the present invention, determining the QoS target values of the respective segments may be performed at respective network nodes related to the link based on an identical rule. According to this embodiment, the method may further comprise obtaining, at respective network nodes, parameters associated therewith and affecting the QoS; and sending the obtained parameters affecting the QoS to other network nodes related to the link so as to share the parameters.

According to the embodiments of the present invention, the parameter affecting the QoS is based on statistical parameters in a certain period of time, and the parameter may comprise one or more of: network deployment characteristic parameter, traffic characteristic parameter of a user; system parameter configuration characteristic parameter; and application characteristic parameter of a network node.

According to the embodiments of the present invention, the QoS may comprise one of: error bit rate, code error rate, symbol error rate, packet error rate, packet error loss rate, signal-to-interference plus noise ratio, and packet delay.

According to a second aspect of the present invention, there is further provided an apparatus for determining QoS of respective segments of a link. The apparatus may comprise: a target value determination module configured to determine QoS target values of respective segments at least based on an overall requirement on QoS of the link according to a relationship between the QoS of the respective segments and overall QoS of the link.

According to a third aspect of the present invention, there is further provided a network node comprising the apparatus according to the second aspect of the present invention.

According to a fourth aspect of the present invention, there is further provided a computer program product having a computer program code embodied thereon which, when loaded in the computer, performs the method according to the first aspect of the present invention.

With the technical solutions as provided in the present invention, it can provide a solution of determining target QoS of respective segments of a link for a multi-hop relay system; by which it may guarantee the overall QoS of the multi-hop relay system. Moreover, in the preferred embodiments, the most suitable QoS target values may be provided to respective segments based on parameters that affect the QoS.

Additionally, the solution of the present invention has a great scalability and can be easily extended to a relay system with any number of hops. Further, the solution as provided in the present invention is intended to optimize the QoS control in a scope of radio access network (RAN) and thus it is transparent to the core network (CN) without any impact thereon. Besides, the solution according to the present invention performs very minor modifications to the current 3GPP LTE-A specification and thus it has a good backward compatibility. Moreover, it is also transparent to LTE Rel-8/9/10 without any impact thereon.

## BRIEF DESCRIPTION OF THE DRAWINGS

The above and other features of the present invention will become more apparent through the detailed description of the preferred embodiments with reference to the accompanying drawings. Like reference numbers represent same or similar components throughout the accompanying drawings of the present invention, wherein:

Fig. 1 illustrates a diagram of segment configuration of a two-hop relay system according to the present invention;

Fig. 2 illustrates a flowchart of a method for determining QoS of respective segments of a link according to an embodiment of the present invention;

Fig. 3 illustrates a flowchart of a method for determining QoS of respective segments of a link according to another embodiment of the present invention;

Fig. 4 illustrates a schematic diagram of an operation of QoS guarantee for a two-hop relay system according to an embodiment of the present invention;

Fig. 5 illustrates a block diagram of an apparatus for determining QoS of respective segments of a link according to an embodiment of the present invention;

Fig. 6 illustrates a block diagram of an apparatus for determining a QoS of respective segments of a link according to another embodiment of the present invention.

## DETAILED DESCRIPTION OF EMBODIMENTS

Hereinafter, detailed description will be made to the method and apparatus for determining QoS of respective segments of a link according to the embodiments of the present invention with reference to the accompanying drawings.

As previously mentioned, in a radio relay system, even if each segment of the link satisfies the QoS requirement in the 3GPP specification, it can not guarantee that the link as a whole satisfies the QoS requirement. Thus, in order to satisfy the QoS requirement of the whole link eNB-RN-UE, a new mechanism should be designed to guarantee the QoS requirement of the entire link.

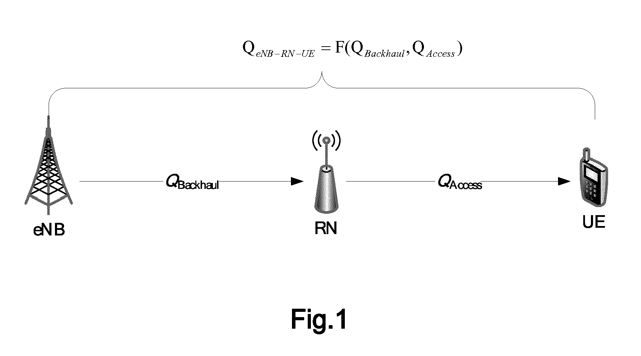

First, the relay system as illustrated in Fig. 1 is referenced to describe the basic principle on which the embodiments of the present invention are based. Fig. 1 illustrates a two-hop relay system comprising a backhaul link eNB-RN and an access link RN-UE. According to the embodiments of the present invention, first, the relation between the QoS ($Q_{backhaul}$ and $Q_{access}$) of respective segments of the link and the overall QoS ($Q_{eNB-RN-UE}$) is established, i.e., finding the following relation equation:

$$Q_{eNB-RN-UE} = F(Q_{backhaul}, Q_{access}) \qquad \text{Equation 1}$$

The packet error loss rate (PLER) in QCI will be taken as an example, in which $P_{backhaul}$ and $P_{access}$ denote the required PELR on the backhaul link and the access link, respectively; and $P_{eNB-RN-UE}$ denotes the required PELR on the entire link eNB-RN-UE. Based on the characteristics of relaying, the backhaul link and the access link may be regarded as two links connected in series. Thus, based on the nature of the QoS index, the correct rate of the entire link may be determined as:

$$1 - P_{eNB-RN-UE} = (1 - P_{backhaul}) \cdot (1 - P_{access}) \qquad \text{Equation 2}$$

Therefore, the following equation may be obtained through simplification:

$$P_{eNB-RN-UE} = P_{backhaul} + P_{access} - P_{backhaul} \cdot P_{access} \qquad \text{Equation 3}$$

In this way, the relationship equation between the $P_{backhaul}$ and $P_{access}$ for respective segments and the overall requirement $P_{eNB-RN-UE}$ can be achieved.

Besides, in Equation 3, $P_{backhaul} \cdot P_{access}$ is a high order term and contributes relatively little to PELR of the entire link; thus, it may be disregarded, and then the following equation may be achieved.

$$P_{eNB-RN-UE} \approx P_{backhaul} + P_{access} \qquad \text{Equation 4}$$

For the sake of simplifying computation, Equation 4 may act as the relationship equation in practical application.

After determining the relationship equation, the target PELR values (i.e., $P_{backhaul}$ and $P_{access}$) of respective segments of the link may be obtained based on the relationship equation and the overall requirement $P_{eNB-RN-UE}$ of the link. In turn, a coordination operation may be performed between eNB and RN based on the target PELR values of respective segments so as to realize the target PELR on each link, thereby guaranteeing an end-to-end QoS requirement.

The scenario of more than two hops is similar to the scenario of two hops; thus, the method can be easily extended to the scenario of more than two hops based on the above depiction. For example, for a relay scenario of more than two hops, the function of its relationship may be expressed below:

$$Q_{overall} = F(Q_{S1}, Q_{S2}, \dots, Q_{Sn}) \qquad \text{Equation 5}$$

wherein Qoverall denotes the overall requirement on the QoS of the link; Qs1, Qs2 and Qs3 denote the QoS of the first segment, the second segment, and the nth segment, respectively; and n denotes the number of segments of the entire link or the number of hops of the relay system.

Further, for other QoS indexes, due to different natures of parameters, the applicable equations might be different from equations 3 and 4; however, based on a similar principle, those skilled in the art may obtain a relation equation for other QoS indexes.

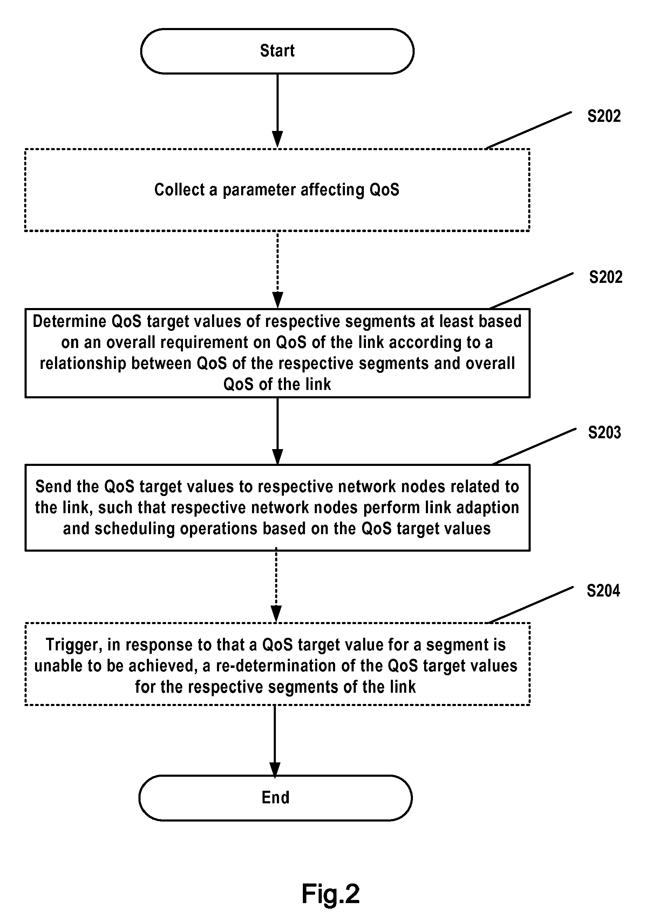

Based on the above-mentioned basic principle, embodiments of the present invention provide a solution of determining QoS of respective segments of the link. Next, reference will be made to Fig. 2 to describe a method for determining QoS of respective segments of a link according to the embodiments of the present invention. Here, Fig. 2 illustrates a schematic flowchart of a method for determining QoS of respective segments of a link according to an embodiment of the present invention.

As illustrated in Fig. 2, first in step S201, QoS target values of respective segments may be determined at least based on an overall requirement on QoS of the link according to a relationship between QoS of respective segments and overall QoS of the link.

Specifically, for different QoS indexes, a relation equation as expressed in Equation 5 may be obtained, i.e., a relationship model or a relationship equation between the overall QoS and the QoS of respective segments can be established. Based on this expression, the target QoS of respective segments may be determined from the total QoS of the link required by the service.

Taking the exemplary scenario as illustrated in Fig. 1 as an example, in an embodiment, the PELRs for the access link and the backhaul link can be set as an identical value, as long as their total sum satisfies the required overall PELR.

The above setting manner does not consider the actual condition of respective segments. In an alternative embodiment, QoS target values for respective segments may be set by further considering the condition of respective segments. Particularly, before determining the QoS target values of respective segments, in step S202 illustrated in dotted-line block 202, parameters affecting QoS are collected. These parameters may be parameters that are related to respective segments and restrain their QoS, for example, they may be network deployment characteristic parameter, traffic characteristic parameter of the user, the system parameter configuration characteristic parameter, application characteristic parameter of network node, etc. It should be noted that for different QoS indexes, the parameters affecting them are also somewhat different. Hereinafter, the following parameters that affect the QoS will be described in detail with the PELR as an example.

For the PELR, the network deployment characteristic parameter may be interference condition for respective segments. The greater the interference of a segment is, the greater the probability for occurrence of error is and thus, the possibly implemented PELR will be greater; in the contrary, the less the interference of the segment is, the less the probability for occurrence of error is and thus the possibly implemented PELR will less. For the PELR, the user's traffic characteristic parameter may be an average throughput and radio resource utilization ratio of respective segments, etc. The higher the throughput of a segments of the link is, or the higher the radio resource utilization ratio is, it means that the greater PELR the link has; on the contrary, the lower the throughput of respective segments is or the less the radio resource utilization ratio is, it means a less PELR. Additionally, for PELR, the system parameter configuration characteristic parameter may be the number of subframes allocated to respective segments for transmission. When a time division multiplexing technology is employed to isolate different segments (for example, for the backhaul link and the access link), the number of subframes allocated for transmitting respective segments of the link is a parameter that can affect the PELR. If the number of subframes allocated for backhaul link is relatively small, in order to guarantee a particular packet delay budget, it is preferable that the HARQ/ARQ retransmission times will decrease correspondingly, which corresponds to a larger PELR. Additionally, for PELR, the application characteristic parameter of a network node may be application scenario of a RN, application scenario of a UE, etc. For example, when the RN is deployed on a moving vehicle and serves the mobile user equipment on the vehicle, a stable access link can be generated, and thus the access link may realize a relatively small PELR; on the contrary, when the UE is in a mobile state while RN is located in the fixed state, then the access link corresponds to a larger PELR.

Thus, the step (step S201) of determining QoS target values of respective segments may be performed further based on these obtained parameters that can affect the QoS. In other words, the QoS target values of respective segments are determined based on these obtained parameters and the required overall QoS in accordance with the relation equation corresponding to the QoS. In this way, in determining the target values of respective segments, real conditions of respective segments may be considered, so as to set an achievable QoS target values for the respective segments, thereby realizing a higher efficiency.

According to one alternative embodiment of the present invention, with objectives of the achievability of the QoS target values of respective segments and maximization of the radio resource utilization ratio, an optimization operation is performed under constrains of the aforementioned relationship, the overall requirement, and the collected parameters, so as to obtain QoS target values of respective segments. The specific optimization operation may be designed for the condition of the system; those skilled in the art would completely implement this optimization operation based on the teaching herein and the technical knowledge grasped thereby. Thus, in order to not obscure the present invention, the optimization operation here will not be detailed.

The above parameters that can affect the QoS are preferably based on statistical values during a rather long period of time. It means performing a semi-static configuration process for respective segments of the link. In other words, the configuration is not dynamically performed with change of the above parameters, and this configuration is not maintained after configuration is completed based on the above parameters (which will be further described in detail hereinafter).

According to the embodiments of Fig. 2, the above determined process may be performed at one of respective network nodes related to the link, for example, implemented at the eNB or any relay node in a centralized manner. Thus, after the QoS target values of respective segments are determined, in step S203, the QoS target values may be sent to respective network nodes related to the link, such that respective network nodes perform link adaption and scheduling operations based on the QoS target values.

After each network node obtains its own QoS target value, a suitable link adaptation and scheduling operation can be performed based on the QoS target value, so as to achieve the target QoS through performing a suitable scheduling on the time domain, spatial domain, and frequency domain. For example, the QoS target value may be achieved by adopting a suitable modulation and coding, power allocation/ control, HARQ mechanism, ARQ mechanism, frequency selectivity scheduling, spatial diversity technology, etc. based on the Qos target value. it is a know technology in the art that performs a link adaptation and scheduling operation to realize the QoS target value, which will not be further detailed here.

The above performing the operation of determining the QoS target values of respective segments may also be called as the configuration process of the segment QoS.

Further, these inventors consider that in actual applications, conditions like link conditions, system parameter configurations, and network deployment are all dynamically changed. Therefore, the initially determined QoS target values might not be adapted to a new scenario after a period of time and some network nodes might not achieve the QoS target values designated thereto regardless of how to perform the link adaptation and scheduling operation.

Based on the above situations, these inventors provide a reconfiguration mechanism. According to an embodiment of the present invention, in step S204 illustrated in dotted-line block (indicating an alternative step), further in response to a QoS target value for a segment being incapable of being satisfied, re-determination of QoS target values for the respective segments of the link is triggered.

According to an embodiment of the present invention, at each network node, its actual QoS is measured; if it is found that the target QoS cannot be satisfied within a period of time, a message may be sent to the network node that determines the QoS target values for respective segments to request for reconfiguration. After receiving the reconfiguration request, the network node for determining the QoS target values may re-collect the required parameters, and re-determine suitable QoS target values for the respective segments. Besides, respective network nodes may also send the parameter that determines the QoS periodically to the network node that determines the QoS target values for respective segments, so that the network node determine whether it is required to re-perform the configuration. When, at the network node, it is determined, based on the parameters sent from other network node, that it is required to re-configure, then the QoS target values of respective segments may be re-determined based on these received parameters.

Thus, the technical solution as provided in this embodiment is a process of performing semi-static configuration for respective segments of the link. Unlike the dynamical configuration manner of dynamically performing configuration with change of these parameters and the static configuration manner of constantly maintaining the configuration after the configuration is completed, this process is a technical solution of performing re-configuration based on observation during a period of time. Thus, this configuration manner can reduce various overheads required by the dynamic configuration and meanwhile can overcome the defect that the static configuration cannot adapt to the change of situations.

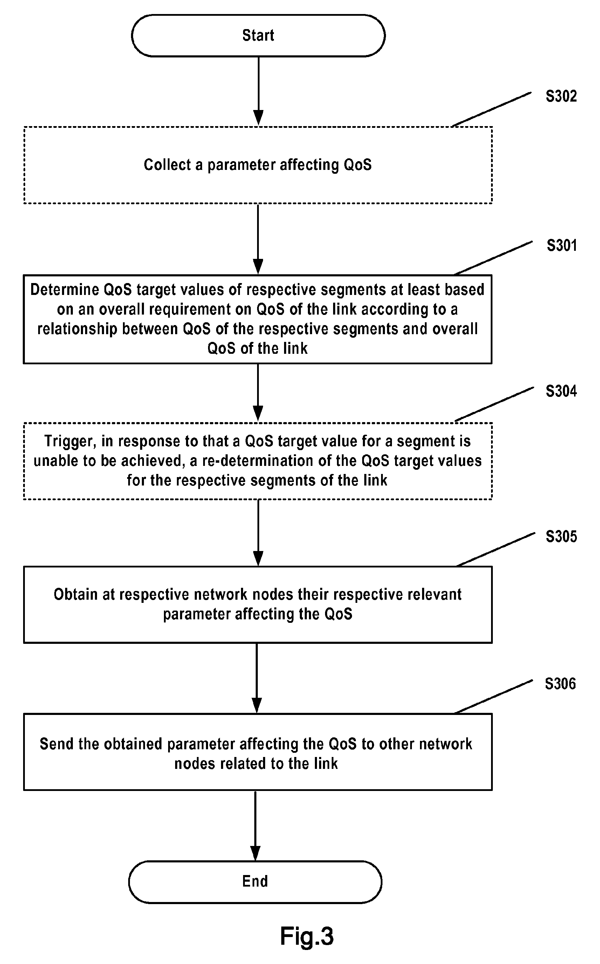

In the embodiments as described above with reference to Fig. 2, a solution is described, which determines QoS target values of respective segments in a centralized manner, i.e., performing the operation of determining the QoS target values at one network node associated with the link. However, the present invention is not limited thereto, but may also be implemented in a distributed manner. Next, the solution according to another embodiment of the present invention will be described with reference to Fig 3.

With reference to Fig. 3, Fig. 3 shows a flowchart of a method for determining QoS target values of respective segments of a link according to another embodiment of the present invention. In this embodiment, the operation of determining target values is implemented at respective network nodes related to the link.

Similar to the embodiment as illustrated in Fig. 2, in step S301, QoS target values of respective segments are determined at least based on an overall requirement on QoS of the link according to a relationship between QoS of the respective segments and overall QoS of the link.

Preferably, before the determining step S301, parameters that affect the QoS may be collected in step S302 as illustrated in dotted-line block (indicating an alternative step), and the QoS target values of respective segments may be further determined based on the collected parameters. In a preferred embodiment, with an objective of the overall requirement of the QoS, under constrains of the collected parameters, optimization operation is performed so as to obtain QoS target values most suitable for respective segments. And further preferably, in step S304 illustrated in dotted-line block (indicating an alternative step), in response to a QoS target value of a segment being incapable of being satisfied, a process of re-determining the QoS target values of respective segments is triggered.

The above steps S301, S302, and S304 are substantially identical to S201, S202, and S204 in the embodiments as illustrated in Fig. 2; for the detailed operations and relevant embodiments of steps S301, S302, and S304, please refer to the depiction with reference to Fig. 2.

In the embodiments as illustrated in Fig. 3, in order to guarantee the consistency between the QoS target values determined by each network node, each network node has to perform the operation of determining the QoS target values based on the same rule. Further, it is also required to realize parameter sharing between respective network nodes.

Thus, in step S305, at each network node, respective relevant parameters affecting the QoS may be obtained. The parameters are those parameters as described above with reference to Fig. 2, and these parameters can be obtained through measurement and/or calculation. Afterwards, in step S306, those obtained parameters affecting the QoS are sent to other network nodes associated with the link so as to share these parameters. In this way, each network node may determine the same QoS target values for respective segments based on the same rule and same parameters. However, each network node is only required to perform a link adaptation and scheduling operation for its own QoS target value, without the necessity of sending other QoS target values as determined to other network nodes.

The embodiment illustrated in Fig. 2 differs from the embodiment illustrated in Fig. 3 in that the embodiment of Fig. 2 is realized in a centralized manner, while the embodiment of Fig. 3 is realized in a distributed manner; the embodiment of Fig. 2 is to collect parameters in a centralized manner and determine the QoS target values in a centralized manner, and the determined target values are sent to other network nodes for sharing, while the embodiment of Fig. 3 is to share parameters between respective network nodes and perform the determining process based on the same rule, thereby obtaining a same determination result. In the scenario of the embodiment of Fig. 2, the network node responsible for determining the target values in a centralized manner collects the parameters from other network nodes and sends the determination result to other network nodes; while in the scenario of the embodiment of Fig. 3, each node mutually sends their own obtained parameters that affect the QoS to other nodes such that each network node may obtain all parameters required for performing the determination.

It should be noted that, for different services, their corresponding QoS levels are also different, and thus the overall requirements on the link are also different. Therefore, it is required to determine the QoS target values for respective segments with respect to different services.

Further, it should be noted that for uplink and downlink, even for the same QoS requirement, the QoS target values of respective segments might possibly be different, because the parameters affecting the uplink QoS and the parameters affecting the downlink QoS might be different. Thus, it is required to perform the operation of determining the QoS target values of respective segments for uplink and downlink, respectively.

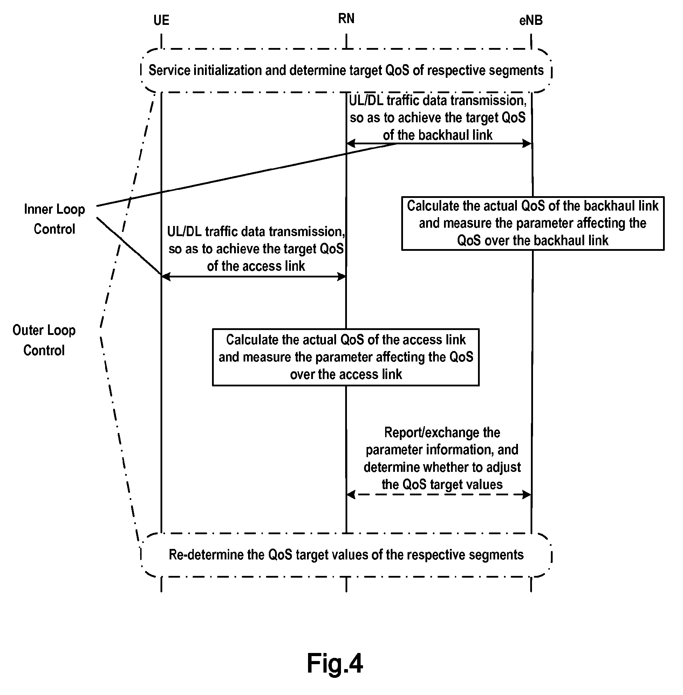

Next, the specific embodiment for guaranteeing QoS according to the present invention will be described with reference to Fig. 4. Fig. 4 illustrates a schematic diagram of an operation of QoS guarantee for a two-hop relay system according to an embodiment of the present invention.

As illustrated in Fig. 4, outer-loop control and inner-loop control are employed to adjust the QoS index (for example PELR) of each segment so as to guarantee the QoS requirement. The outer-loop control is illustrated in a single dotted line in Fig. 4 and mainly responsible for performing service initialization and determine the target QoS of respective segments of the link based on the method as above mentioned in the present invention(OLC1), and adjust the target QoS of respective segments of the link in response to the relatively long-term measurement and report from a relevant network node (for example base station eNB or relay node RN), i.e., performing the operation of re-determining the target values (OLC2). The inner-loop control is illustrated in Fig. 4 with a solid line and responsible for performing some link adaptation measurement and proper scheduling, for example, adaptive modulation and coding, power allocation/ control, HARQ, ARQ, frequency selective scheduling, spatial diversity techniques, etc., to achieve the target PELR. Besides, during or after performing data transmission, a practical QoS computation and parameter obtaining operation may also be performed so as to determine whether to reconfigure and collect parameters for the reconfiguration.

As illustrated in Fig. 4, first, in the outer-loop control OLC1, service initialization is performed; based on the overall requirement on QoS of the eNB-RN-UE, the UL/DL QoS targets of respective segments (the access link and the backhaul link) are determined according to the methods described above with reference to Figs. 2 and 3.

Next, in the inner-loop controls ILC1 and ILC2, the eNB and RN perform appropriate link adaptation and scheduling operation with the target QoS of respective segments of link as an objective and perform DL/UL data transmission. During or after performing a corresponding data transmission, the eNB and RN computes the realized QoS and measure some parameters affecting the QoS, respectively; these parameters are used for QoS reconfiguration possibly performed in the future. Event-triggered or periodic report manner may be employed to exchange respective parameter information between respective network nodes for using in a possible QoS reconfiguration for respective segments in the future.

When it is determined that it is impossible to implement the target QoS of at least one segments, re-determination of the QoS target values of respective segments may be performed for example in the outer-loop control OLC2, i.e., reconfiguring.

With the solutions provided in the present invention, it can provide a technique of determining a target QoS of respective segments of the link for a multi-hop relay system. This solution may guarantee the overall QoS of the multi-hop relay system. Moreover, in the preferred embodiments, the most suitable QoS target values may be provided to respective segments based on parameters that affect the QoS.

Additionally, the technical solution of the present invention has a great extensibility and can be easily extended to a relay system with any number of hops. Further, the technical solutions as provided in the present invention is intended to optimize QoS control in a scope of radio access network (RAN); the optimization is transparent to the core network (CN) without any impact thereon. Besides, the technical solutions according to the present invention perform very minor modifications to the current 3GPP LTE-A specification and thus have a good backward compatibility; moreover, they are also transparent to LTE Rel-8/9/10 without any impact thereon.

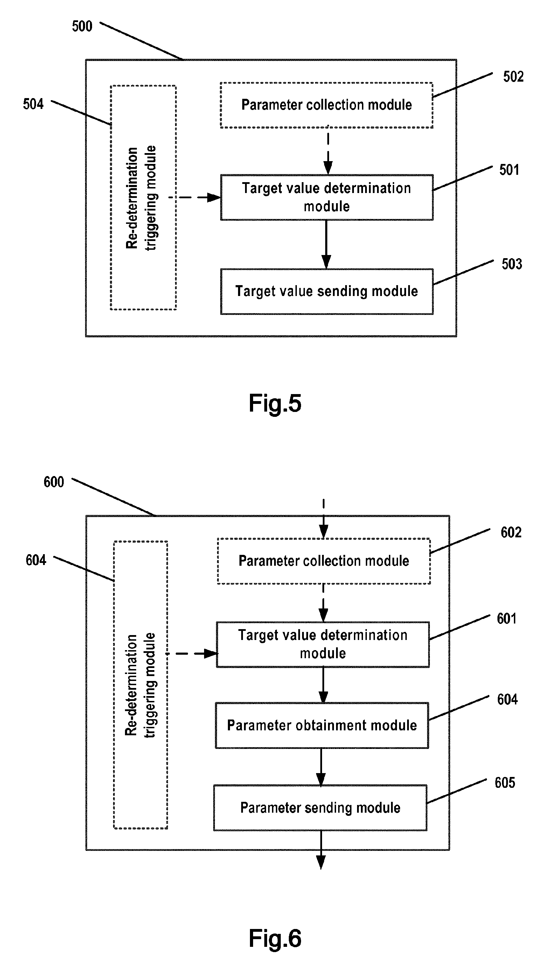

Additionally, the present invention further provides an apparatus for determining QoS of respective segments of a link. Hereinafter, description will be made with reference to Fig. 5 and Fig. 6.

First, with reference to Fig. 5, Fig. 5 illustrates an apparatus 500 for determining a QoS of respective segments of a link according to an embodiment of the present invention. The apparatus 500 may comprise: a target value determination module 501 that may be configured to determine QoS target values of respective segments at least based on an overall requirement on QoS of the link according to a relationship between QoS of respective segments and overall QoS of the link.

As illustrated in Fig. 5, the apparatus 500 may further comprise: a parameter collection module 502 (illustrated in dotted-line block, indicating an alternative module) configured to collect the parameters affecting the QoS. In this scenario, the target value determination module 501 may be configured to further determine the QoS target values of respective segments of the link based on the collected paramters. In an embodiment of the present invention, the target value determination module 501 may be configured to perform an optimization operation with an objective of the overall requirement of the QoS under the conditions of the collected parameters, thereby obtaining the QoS target values of respective segments. According to another embodiment of the present invention, the target value determination module 501 may be configured to determine the QoS target values of respective segments of the link for the uplink and downlink, respectively.

According to an embodiment of the present invention, the target value determination module 501 may be configured to determine, at one of the network nodes associated with the link, the QoS target values of respective segments of the link. In this embodiment, the apparatus 500 may further comprise a target value sending module 503 configured to send the determined QoS target values to respective network nodes associated with the link such that the respective network nodes perform link adaptation and scheduling operations based on the QoS target values.

Besides, in another embodiment of the present invention, the apparatus 500 may further comprise: a re-determination triggering module 504 (illustrated in dotted-link block, indicating an alternative module) configured to trigger the target value determination module 501 to re-determine the QoS target values of respective segments in response to that a QoS target value of a segment is unable to be achieved so as to re-determine the QoS target values of respective segments.

According to the embodiments of the present invention, the collected parameter are based on statistical parameters over a period of time. The parameter may comprise one o more of: network deployment characteristic parameter, traffic characteristic parameter of the user; system parameter configuration characteristic parameter; and application characteristic parameter of the network node.

Besides, Fig. 6 illustrates an apparatus for determining a QoS of respective segments of a link according to another embodiment of the present invention. As illustrated in Fig. 6, the apparatus 600 may comprise a target value determination module 601, an optional parameter collection module 602, and an optional re-determination triggering module 604, which correspond to target value determination module 501, parameter collection module 502, and re-determination triggering module 504, respectively. Regarding the modules and relevant embodiments in Fig. 6 which are similar to those of Fig. 5, please refer to the description of Fig. 5, which will not be detailed here for the sake of clarity.

What is different from Fig. 5 is that the target value determination module 601 as illustrated in Fig. 6 may be configured to determine the QoS target values of respective segments based on the same rule at respective network nodes associated with the link. In this embodiment, the apparatus may further comprise: a parameter obtainment module 605 configured to obtain respective relevant parameters affecting the QoS at respective network nodes; and parameter sending module 606 configured to send the obtained parameters affecting the QoS to other network nodes associated with the link so as to share the parameters.

Besides, the present invention may further provide a network node, comprising an apparatus described with reference to any embodiment of Fig. 5 an Fig. 6. The network node may be a relay node or a base station.

Further, the present invention may also be implemented through a computer program. To this end, the present invention further provides a computer program product having a computer program code embodied thereon, which, when loaded to a computer, performs the method of determining QoS of respective segments of the link according to the present invention.

For detailed operations of respective modules in various embodiments as described with reference to Fig. 5 and Fig. 6, please refer to the method for determining QoS of respective segments of the link according to the present invention as described above with reference to Figs. 2 to 4.

Hereinabove, depiction on the present invention has been made with the two-hop relay as an example. However, the present invention is not limited thereto, but may be applied to a relay system with more than two hops. Moreover, based on the above depiction on the two-hop relay, those skilled in the art would easily extend it to the scenario of multiple hops.

Hereinabove, the present invention has been described with an example of using the PELR in QC1 as the QoS index; however, the present invention is not limited thereto. Based on the teaching provided herein, those skilled in the art may apply it to for example a packet delay budget in QCI, or further applied to other QoS index, such as error bit rate, error code rate, error symbol rate, packet error rate, packet error loss rate, and signal-to-interference plus noise ratio, etc.

Besides, it should be further noted that for different QoS indexes, the relation expression between the QoS of respective segments and the overall QoS might be slightly different. However, based on the depiction with PELR as an example in the present invention, those skilled in the art would undoubtedly extend it to other QoS index.

Additionally, the present invention has been described above mainly with reference to the 3GPP system; however, those skilled in the art would appreciate that the present invention may also be applied to other communication network in a similar scenario.

It should be noted that the embodiments of the present invention can be implemented with software, hardware or the combination thereof. The hardware part can be implemented by a special logic; the software part can be stored in a memory and executed by a proper instruction execution system such as a microprocessor or a design-specific hardware.

Although the present invention has been depicted with reference to the currently considered embodiments, it should be understood that the present invention is not limited the disclosed embodiments. On the contrary, the present invention is intended to cover various modifications and equivalent arrangements included in the spirit and scope of the appended claims. The scope of the appended claims is accorded with the broadest explanations and covers all such modifications and equivalent structures and functions.

## Claims

1.  A method for determining QoS of respective segments of a link, comprising:

    determining QoS target values of the respective segments at least based on an overall requirement on QoS of the link according to a relationship between the QoS of the respective segments and overall QoS of the link.

2.  The method according to claim 1, further comprising:

    collecting a parameter that affects the QoS; and
    wherein the determining QoS target values of the respective segments at least based on the overall requirement on QoS of the link is further performed based on the collected parameter.

3.  The method according to claim 2, wherein the determining QoS target values of the respective segments comprises: performing an optimization operation with objectives of the achievability of the QoS target values of the respective segments and maximization of radio resources utilization rate, under constrains of the relationship, the overall requirement, and collected parameter, so as to obtain the QoS target values of the respective segments.

4.  The method according to claim 1, further comprising:

    triggering, in response to that a QoS target value of a segment is unable to be achieved, a re-determination of the QoS target values of the respective segments.

5.  The method according to claim 1, wherein the determining the QoS target values of the respective segments is performed at one of the network nodes associated with the link, and the method further comprises:

    sending the QoS target values to respective network nodes associated with the link, such that the respective network nodes perform link adaptation and scheduling operations based on the QoS target values.

6.  The method according to claim 1, wherein the determining the QoS target values of the respective segments is performed based on an identical rule at respective network nodes associated with the link.

7.  The method according to claim 6, further comprising:

obtaining, at the respective network nodes, parameters associated therewith and affecting the QoS; and sending the obtained parameters affecting the QoS to other network nodes associated with the link so as to share the parameters.

8. The method according to claim 2, wherein the parameter is based on statistical parameters over a period of time, and the parameter comprises one or more of:

network deployment characteristic parameter;
service characteristic parameter of a user;
system parameter configuration characteristic parameter; and
application characteristic parameter of a network node.

9. The method according to claim 1, wherein the QoS comprises one of error bit rate, code error rate, symbol error rate, packet error rate, packet error loss rate, signal-to-interference plus noise ratio, and packet delay.

10. An apparatus for determining QoS of respective segments of a link, comprising:

a target value determination module configured to determine QoS target values of the respective segments at least based on an overall requirement on QoS of the link according to a relationship between the QoS of respective segments and overall QoS of the link.

11. The apparatus according to claim 10, further comprising:

a parameter collection module configured to collect a parameter that affects the QoS; and
wherein the target value determination module is configured to further determine the QoS target values of the respective segments based on the collected parameter.

12. The apparatus according to claim 11, wherein the target value determination module is configured to perform an optimization operation with an objective of the overall requirement of the QoS, under a condition of the parameter, so as to obtain the QoS target values of the respective segments.

13. The apparatus according to claim 10, further comprising:

a re-determination triggering module configured to trigger the target value determination module to re-determine the QoS target values of the respective segments in response to that a QoS target value of a segment is unable to be achieved.

14. The apparatus according to claim 10, wherein the target value determination module is configured to determine the QoS target values of the respective segments at one of the network nodes associated with the link, and the apparatus further comprises:

a target value sending module configured to send the QoS target values to respective network nodes associated with the link, such that the respective network nodes perform link adaptation and scheduling operations based on the QoS target values.

15. The apparatus according to claim 10, wherein the target value determination module is configured to determine the QoS target values of the respective segments based on an identical rule at respective network nodes associated with the link.

16. The apparatus according to claim 15, further comprising:

a parameter obtainment module configured to obtain at the respective network nodes parameters associated therewith and affecting the QoS; and
a parameter sending module configured to send the obtained parameters affecting the QoS to other network nodes associated with the link so as to share the parameters.

17. The apparatus according to claim 11, wherein the parameter is based on statistical parameters over a period of time, and the parameter comprises one or more of:

network deployment characteristic parameter;
service characteristic parameter of a user;
system parameter configuration characteristic parameter; and
application characteristic parameter of a network node.

18. The apparatus according to claim 10, wherein the QoS comprises one of error bit rate, code error rate, symbol error rate, packet error rate, packet error loss rate, signal-to-interference plus noise ratio, and packet delay.

19. A network node, comprising an apparatus according to any one of claims 10 to 18.

20. The network node according to claim 19, wherein the network node is a relay node or a base station.

$$Q_{eNB-RN-UE} = \mathrm{F}(Q_{Backhaul}, Q_{Access})$$

$Q_{Backhaul}$

$Q_{Access}$

eNB

RN

UE

# Fig.1

Start

Collect a parameter affecting QoS

S202

Determine QoS target values of respective segments at least based on an overall requirement on QoS of the link according to a relationship between QoS of the respective segments and overall QoS of the link

S202

Send the QoS target values to respective network nodes related to the link, such that respective network nodes perform link adaption and scheduling operations based on the QoS target values

S203

Trigger, in response to that a QoS target value for a segment is unable to be achieved, a re-determination of the QoS target values for the respective segments of the link

S204

End

Fig.2

**Fig.3**

UE                                    RN                              eNB

Service initialization and determine target QoS of respective segments

UL/DL traffic data transmission,
so as to achieve the target QoS
of the backhaul link

Inner Loop
Control

Calculate the actual QoS of the backhaul link
and measure the parameter affecting the
QoS over the backhaul link

UL/DL traffic data transmission,
so as to achieve the target QoS
of the access link

Outer Loop
Control

Calculate the actual QoS of the access link
and measure the parameter affecting the QoS
over the access link

Report/exchange the
parameter information, and
determine whether to adjust
the QoS target values

Re-determine the QoS target values of the respective segments

Fig.4

500

504

502
Parameter collection module

Re-determination triggering module

501
Target value determination module

503
Target value sending module

## Fig.5

600

604

602
Parameter collection module

Re-determination triggering module

601
Target value determination module

604
Parameter obtainment module

605
Parameter sending module

## Fig.6

# INTERNATIONAL SEARCH REPORT

| | International application No. |
|---|---|
| | PCT/CN2010/071561 |

### A. CLASSIFICATION OF SUBJECT MATTER

H04W 28/16 (2009.01)i

According to International Patent Classification (IPC) or to both national classification and IPC

### B. FIELDS SEARCHED

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

WPI,EPODOC, CPRSABS, CNKI: section, segment, slice, service, quality , total, whole, entire, target value

### C. DOCUMENTS CONSIDERED TO BE RELEVANT

| Category* | Citation of document, with indication, where appropriate, of the relevant passages | Relevant to claim |
|---|---|---|
| X | CN101442495A (UNIV NANJING POSTS&TELECOM) 27 May 2009 (27.05.2009) | 1,2, 8-12, 17-20 |
| | Description page 3 lines 5-26, page 5 lines 2-12, figures 1-5 | |
| A | Ditto | 3-7,13-16 |
| A | CN101335703A (ZTE COMMUNICATION CO LTD) 31Dec. 2008 (31.12.2008) the whole document | 1-20 |
| A | CN1665155A（SPREADTRUM COMMUNICATIONS SHANGHAI CO LTD） | 1-20 |
| | 07 Sep. 2005（07.09.2005）the whole document | |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13 Dec. 2010 (13.12.2010) | **13 Jan. 2011 (13.01.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>**ZHANG，Xiaohui**<br>Telephone No. (86-10)62411322 |
|---|---|

Form PCT/ISA /210 (second sheet) (July 2009)

## INTERNATIONAL SEARCH REPORT
Information on patent family members

| International application No. |
| --- |
| PCT/CN2010/071561 |

| Patent Documents referred in the Report | Publication Date | Patent Family | Publication Date |
| --- | --- | --- | --- |
| CN101442495A | 27.05.2009 | None | |
| CN101335703A | 31.12.2008 | None | |
| CN1665155A | 07.09.2005 | CN100355218C | 12.12.2007 |

Form PCT/ISA /210 (patent family annex) (July 2009)